# EUROPEAN PATENT APPLICATION

(11) **EP 4 052 921 A1**
(43) Date of publication of application: **07.09.2022**
(21) Application number: 20880759.4
(22) Date of filing: 09.10.2020
(51) Int. Cl.: B44F 1/02, B32B 33/00, B44C 3/02

(54) **UNEVEN STRUCTURAL BODY AND LAYERED BODY**

(30) Priority: 29.10.2019 JP 2019195928
(71) Applicant: AGC INC., Chiyoda-ku, Tokyo 1008405 (JP)
(72) Inventor: HAYAMI, Yutaka, Tokyo 100-8405 (JP)
(74) Representative: Müller-Boré & Partner Patentanwälte PartG mbB
(86) International application number: PCT/JP2020/038292
(87) International publication number: WO 2021/085084

(57) **Abstract**

The present invention provides an uneven structural body which is superior in design to the related art. The uneven structural body (20) includes an uneven layer (22) having a surface including a plurality of convex sections or concave sections with a meandering linear shape in plan view, in which in the uneven layer, the plurality of convex sections or concave sections are formed to be aligned at a pitch of 1000 µm or less from a first to an n-th (n≥10) convex section or concave section, and when, for each convex section or concave section, an imaginary rectangle having a minimum area circumscribing the whole of the convex section or concave section is drawn, and a plurality of pole points each having a tangent line parallel to the linear direction of two mutually opposed sides of the imaginary rectangle are defined as specific pole points (line ends are not included in the specific pole points), and when an operation of connecting, with an x-th imaginary line, one specific pole point of an x-th (1≤x≤n-1) convex section or concave section and one specific pole point of an x+1 convex section or concave section, which is closest to the specific pole point of the x-th convex section or concave section, is repeated, the linear direction of the x-th imaginary line and the linear direction of the (x+1)-th imaginary line are different.

## Description

### Technical Field

The present invention relates to an uneven structural body and a layered body including the uneven structural body.

### Background Art

Glass plates, which have high durability and smoothness in the surfaces, and are excellent in designability due to their texture and reflection or the like, are widely used for such as buildings and interiors. Furthermore, in recent years, glass materials with higher designability have been increasingly demanded in the application such as building materials including window materials, flooring materials, wall materials, and ceiling materials; interior materials such as table tops; exterior materials of white goods including washing machines and refrigerators; interior and exterior materials of an automotive such as a vehicle; and electronic devices such as a mobile phone and a personal digital assistant (PDA). The application of glass materials with higher designability is expected to increase even further from now on.

Under such a background, a laminated glass in which different kinds of materials other than a glass, such as a polyethylene terephthalate (PET) film for printing, paper such as Japanese paper, a cloth, a metal, a marble, a wood, a pressed flower, and leaf veins is enclosed inside, has been proposed. Such laminated glass is a five-layered structure consisting of a glass plate/a translucent resin film (interlayer film)/a different kind of material/a translucent resin film (interlayer film)/a glass plate, as a basic structure. By visually recognizing the different kind of material through a front surface of the glass plate, a design with excellent in appearance can be achieved.

The different kinds of materials include a color, a design pattern, and a pattern or the like and can function as a design layer. For example, Patent Literature 1 discloses a five-layered body constituted by stacking a glass plate/an adhesive film/a projected plate backing sheet/an adhesive film/a glass plate (Claim 1).

In the foregoing application, a glass plate of a back side is not essential. Further, instead of a glass plate, any substrate of a translucent resin plate or the like may be used. Regarding a layered body including a design layer, high value-added various products have been requiring more sophisticated designability.

### Citation List

### Patent Literature

Patent Literature 1: Japanese Examined Patent Application Publication No. H08-015770
Patent Literature 2: International Patent Publication No. WO 2018/221326
Patent Literature 3: Japanese Unexamined Patent Application Publication No. 2008-018631
Patent Literature 4: Japanese Unexamined Patent Application Publication No. 2015-120328

### Summary of Invention

### Technical Problem

The inventor of the present invention has proposed an uneven structural body including an uneven layer having a fine uneven pattern designed to have reflection factor anisotropy or a layered body including the uneven structural body in Patent Literature 2 and the like. Concerning an uneven structural body or a layered body including the uneven structural body that has been proposed by the inventor of the present invention, when the angle of an uneven structural body or a layered body including the uneven structural body, a visual line or a light source changes, a change in the brightness is different according to the in-plane position. Thus, a variety of changes in contrast can be observed, exhibiting superior designability.

As related technologies of the present invention, the following Patent Literatures 3 and 4 are exemplified.

Patent Literature 3 discloses a bright ornament including a transparent substrate, a plurality of blocks consisting of linear convex transparent projection arranged on the back surface of the transparent substrate in parallel, and a light reflective layer arranged so as to cover the plurality of blocks on the back surface of the transparent substrate, and in which each block of the plurality of blocks has a different extending direction of the linear convex transparent protrusion from at least one of the adjacent blocks (Claim 1).

Patent Literature 4 discloses a printed matter of a changing image which can change the visibility of a pattern on the printed substrate depending on the viewing angle by forming a plurality of pattern line drawings through changing a length, a spacing, a line width or an angle with respect to each line of the line drawings of an array of straight or curved lines that do not overlap with each other and by printing these combined pattern line drawings over the whole surface on a print substrate with ink to form a line drawing having a mountain-shaped cross section (Claim 1).

The present invention has been made in view of the above situation, and an object of the present invention is to provide a structure with a more superior designability achieved through a more complex appearance change in an uneven structural body or a layered body including the uneven structural body when the angle of an uneven structural body or a layered body including the uneven structural body, a visual line or a light source changes, a different brightness change according to the in-plane position creates a variety of changes in contrast.

### Solution to Problem

An uneven structural body of the present invention includes an uneven layer having a surface including a plurality of convex sections or concave sections with a meandering linear shape in plan view, the uneven layer including:
the plurality of convex sections or concave sections are formed to be aligned, in plan view, at a pitch of no more than 1000 µm from a first section to an n-th section,
the n is an integer greater than or equal to 10,
when an imaginary rectangle of a minimum area circumscribing the entire convex section or concave section is drawn for each concave or convex section and a plurality of pole points where a tangent line is parallel to a linear direction of two mutually opposing sides of the imaginary rectangle are defined as specific pole points (the line ends are not included in the pole points), and when x is an integer satisfying 1≤x≤n-1,
if an operation is repeated to connect, with an x-th imaginary line, one specific pole point of the x-th convex or concave section and one specific pole point of the (x+1)-th convex or concave section which is closest to the specific pole point of the x-th convex or concave section, considering any one specific pole point of the first convex or concave section as a starting point, until reaching one specific point of the n-th convex or concave section,
then the linear direction of the x-th imaginary line and the linear direction of the (x+1)-th imaginary line are different.

A layered body of the present invention includes the foregoing uneven structural body of the present invention.

### Advantageous Effects of Invention

An uneven structural body or a layered body including the uneven structural body of the present invention includes an uneven layer including reflection factor anisotropy on which a plurality of convex sections or concave sections with a meandering linear shape in plan view are formed to be aligned. Therefore, when the angle of an uneven structural body or a layered body including the uneven structural body, a visual line or a light source changes, a different brightness change according to the in-plane position creates a variety of changes in contrast, thereby exhibiting superior designability.

An uneven structural body or a layered body including the uneven structural body of the present invention are designed to have a more complicated plan pattern of a convex section or a concave section with a meandering linear shape in plan view compared to the related art. For that reason, a more complexed change in the contrast leads to a more stereoscopic visualization and a more complexed change in the appearance. Thus, a more superior designability is created.

### Brief Description of the Drawings

Fig. 1A shows an example of a schematic plan view of a convex or a concave section with a meandering linear shape in plan view that is included in an uneven layer of an uneven structural body.
Fig. 1B shows another example of a schematic plan view of a convex or a concave section with a meandering linear shape in plan view that is included in an uneven layer of an uneven structural body.
Fig. 2A is a schematic plan view illustrating a pattern of a plurality of convex or concave sections of Example 1.
Fig. 2B is a drawing illustrating an example of an imaginary line group connecting a specific pole point of a plurality of convex or concave sections regarding a pattern shown in Fig. 2A.
Fig. 3A is a schematic plan view illustrating a pattern of a plurality of convex or concave sections of Example 2.
Fig. 3B is a drawing illustrating an example of an imaginary line group connecting a specific pole point of a plurality of convex or concave sections regarding a pattern shown in Fig. 3A.
Fig. 4 is a schematic plan view illustrating a pattern of a plurality of convex or concave sections of Example 3.
Fig. 5 is a schematic plan view illustrating a pattern of a plurality of convex or concave sections of Example 4.
Fig. 6 is a graph showing an example of the relationship between a number x of an imaginary line and an angle of an imaginary line regarding each of the patterns shown in Fig. 2A (Example 1), Fig. 3A (Example 2), and Fig. 5 (Example 4).
Fig. 7 is a graph showing an example of the relationship between a number x of a convex or a concave section and the number of specific pole points included in one convex or concave section regarding each of the patterns shown in Fig. 2A (Example 1), Fig. 3A (Example 2), Fig. 4 (Example 3), and Fig. 5 (Example 4).
Fig. 8 is a schematic cross-sectional view of a layered body of a first embodiment according to the present invention.
Fig. 9 is a schematic cross-sectional view of a layered body of a second embodiment according to the present invention.
Fig. 10 is a schematic cross-sectional view of a layered body of a third embodiment according to the present invention.
Fig. 11 is a schematic cross-sectional view of a layered body of a fourth embodiment according to the present invention.
Fig. 12 is a schematic cross-sectional view of a layered body of a fifth embodiment according to the present invention.
Fig. 13 is a schematic cross-sectional view of an arranging direction of a plurality of concave sections of molds manufactured in the Examples section.

### Description of Embodiments

In this specification, a separation distance between mutually adjacent concave sections is referred to as a distance between the concave sections, whereas a separation distance between mutually adjacent convex sections is referred to as a distance between the convex sections.

In this specification, a width and a pitch of a convex or a concave section are a width and a pitch of a convex or a concave section in the arranging direction of a plurality of convex or concave sections. Likewise, a distance between the convex sections is a distance between the convex sections in the arranging direction of a plurality of convex sections, while a distance between the concave sections is a distance between the concave sections in the arranging direction of a plurality of concave sections.

In general, a thin-film structural body is referred to as a film and a sheet or the like depending on the thickness. In this specification, the above-mentioned names are not clearly distinguished. Therefore, a film may include a sheet, and a sheet may include a film.

In this specification, unless otherwise indicated, the symbol "-", which shows a range of a numerical value, is used to include the numerical values listed before and after it as the lower and upper limits.

Hereinafter, embodiments of the present invention are described.

### [An Uneven Structural Body]

An uneven structural body of the present invention includes an uneven layer having a surface including a plurality of convex or concave sections with a meandering linear shape in plan view.

In the uneven layer, a plurality of convex sections or concave sections are formed to be aligned, in plan view, at a pitch of no more than 1000 µm from a first section to an n-th section.

An n is an integer greater than or equal to 10, preferably an integer greater than or equal to 100, and more preferably an integer greater than or equal to 1000. Although the upper limit of the n is not particularly limited, it is preferably 10000000 or less, and more preferably 1000000 or less.

It is preferable that a pitch is small, preferably 100 µm or less, and more preferably 50 µm or less.

When an imaginary rectangle of a minimum area circumscribing the entire convex section or concave section is drawn for each concave or convex section and a plurality of pole points where a tangent line is parallel to a linear direction of two mutually opposing sides of the imaginary rectangle are defined as specific pole points. Note that the line ends are not included in the pole points.

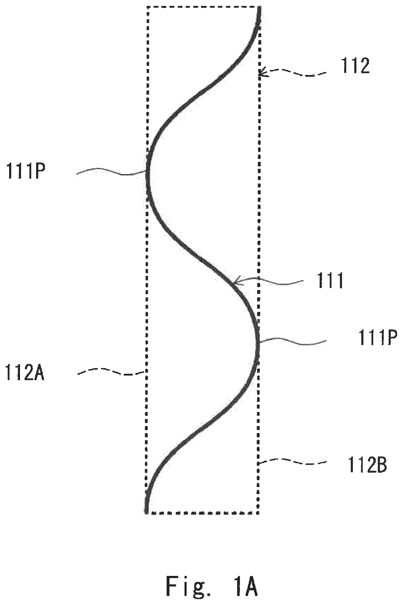

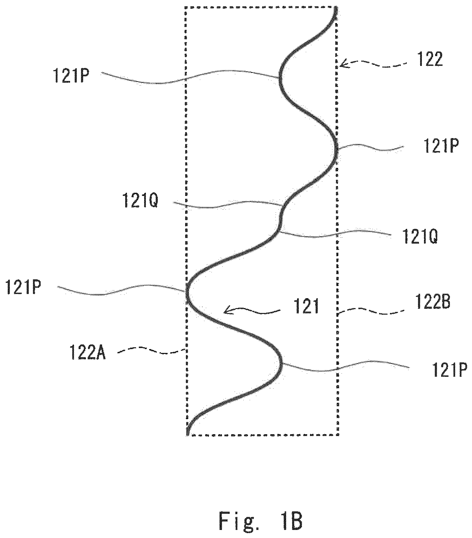

Figs. 1A and 1B show examples of schematic plan views of a convex or a concave section with a meandering linear shape in plan view. In the figures, bold lines 111, 121 denote one convex or one concave section. Each of the convex section or the concave section in the illustrated example includes both line ends. In the figures, reference numerals 112, 122 each denote an imaginary rectangle of a minimum area circumscribing the entire convex section or concave section 111, 121.

The convex section or the concave section 111 shown in Fig. 1A includes two pole points, both of which are specific pole points 111P where a tangent line is parallel to a linear direction of two mutually opposing sides of 112 A, 112B of the imaginary rectangle 112. In the example shown in Fig. 1A, each of the two specific pole points 111P is on the two sides 112A, 112B facing each other of the imaginary rectangle 112.

The convex section or the concave section 121 shown in Fig. 1B includes six pole points. Four out of these six pole points are specific pole points 121P where a tangent line is parallel to a linear direction of two mutually opposing sides of 122A, 122B of the imaginary rectangle 122. In the figure, points 121Q are pole points, however, they are not point applicable to the definition of a specific pole point. In the example illustrated in Fig. 1B, the two of the four specific pole points 121P are on the two sides 122A, 122B facing each other of the imaginary rectangle 122, while the remaining two specific pole points 121P are within the imaginary rectangle 122.

A plan shape of a convex or a concave section included in an uneven structural body of the present invention is not limited to the example of an illustrated figure, and the design may be changed as needed, as long as such plan shape has a meandering linear shape in plan view. Further, a plan shape of a convex or a concave section included in an uneven structural body of the present invention may be an annular meandering linear shape without line ends in plan view.

x is an integer satisfying 1≤x≤n-1.

In the uneven layer of an uneven structural body of the present invention, in plan view,
if an operation is repeated to connect, with an x-th imaginary line, one specific pole point of the x-th convex or concave section and one specific pole point of the (x+1)-th convex or concave section which is closest to the specific pole point of the x-th convex or concave section, considering any one specific pole point of the first convex or concave section as a starting point, until reaching one specific point of the n-th convex or concave section,
then the linear direction of the x-th imaginary line and the linear direction of the (x+1)-th imaginary line are different.

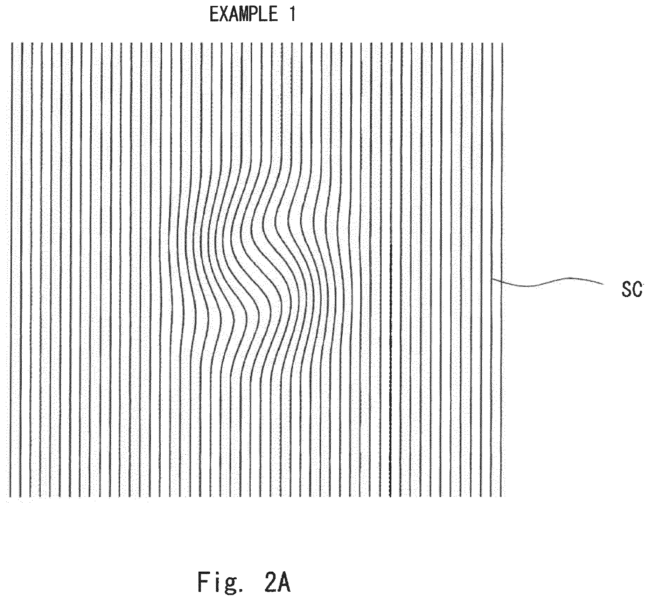

Figs. 2A, 3A, 4, and 5 are schematic plan views showing examples of plan patterns of a plurality of convex or concave sections SC. In these figures, a plurality of convex or concave sections SC with a linear or a meandering linear shape in the vertical direction are formed in the horizontal direction, with a pitch of 1000 µm or less, preferably 100 µm or less, more preferably 50 µm or less.

Figs. 2A, 3A, 4, and 5 are plan patterns of convex or concave SC formed in the Examples section described later. Note that a line width and a pitch of a convex or a concave SC are shown magnified than the actual size.

In the pattern shown in Fig. 2A, although a convex or a concave section SC with a linear shape and a convex or a concave section SC with a meandering linear shape are mixed, a first to an n-th convex or concave section SC with a meandering linear shape in plan view are identified from a plurality of convex or concave sections SC. That is, a first to an n-th convex or concave section SC do not include a linear convex or a concave section SC.

Here, as examples, regarding the plan patterns shown in Figs. 2A, 3A, 4, and 5, a convex or a concave section with a meandering linear shape in plan view located in the left end in the figures is considered to be a first convex or concave section, whereas a convex or a concave section with a meandering linear shape in plan view located in the right end in the figures is considered to be an n-th convex or concave section.

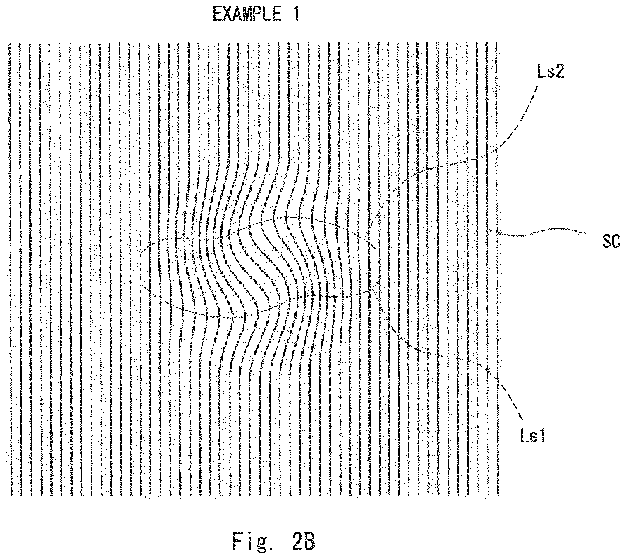

Fig. 2B exemplifies an imaginary line group obtained by repeating an operation to connect, with an x-th imaginary line, with respect to the plurality of convex or concave sections SC shown in Fig. 2A, one specific pole point of the x-th (1≤x≤n-1) convex or concave section SC and one specific pole point of the (x+1)-th convex or concave section SC which is closest to the specific pole point of the x-th convex or concave section, considering any one specific pole point of the first convex or concave section SC as a starting point, until reaching one specific point of the n-th convex or concave section SC. Fig. 2B shows two imaginary line groups Ls1, Ls2 as an example.

In Fig. 2B, the imaginary line group Ls1 is not a linear line, and the linear direction (linear angle) in the plurality of imaginary lines included in the imaginary line group Ls1 is changed. In the imaginary line group Ls1, the linear direction of the x-th imaginary line and the linear direction (linear angle) of the (x+1)-th imaginary line are different. The same is true for the imaginary line group Ls2.

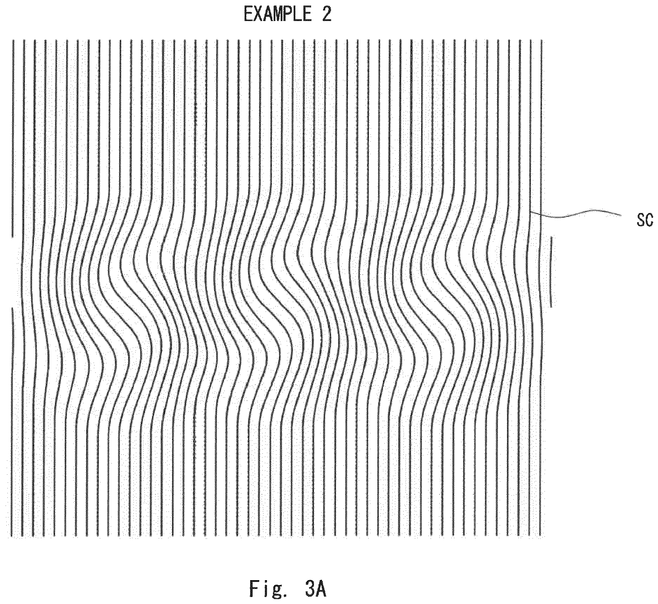

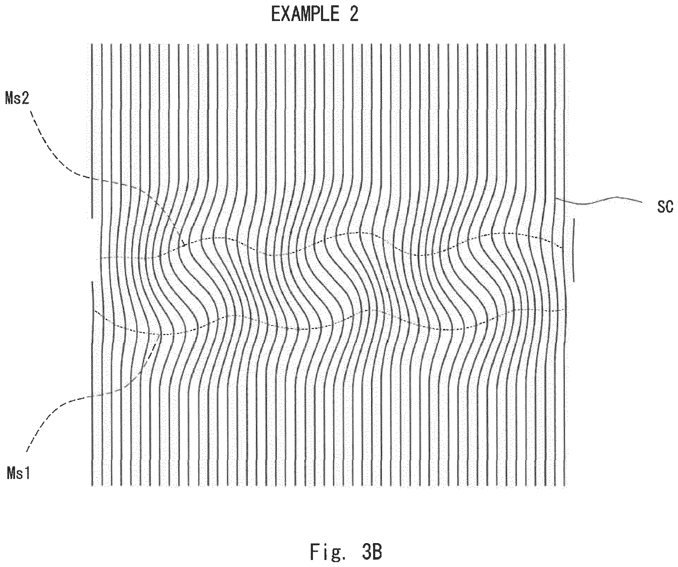

Fig. 3B exemplifies an imaginary line group obtained by repeating an operation to connect, with an x-th imaginary line, with respect to the plurality of convex or concave sections SC shown in Fig. 3A, one specific pole point of the x-th (1≤x≤n-1) convex or concave section SC and one specific pole point of the (x+1)-th convex or concave section SC which is closest to the specific pole point of the x-th convex or concave section, considering any one specific pole point of the first convex or concave section SC as a starting point, until reaching one specific point of the n-th convex or concave section SC. Fig. 3B shows two imaginary line groups Ms1, Ms2 as an example.

In Fig. 3B, the imaginary line group Ms1 is not a linear line, and the linear direction (linear angle) in the plurality of imaginary lines included in the imaginary line group Ms1 is changed. The linear direction of the x-th imaginary line and the linear direction (linear angle) of the (x+1)-th imaginary line are different. The same is true for the imaginary line group Ms2.

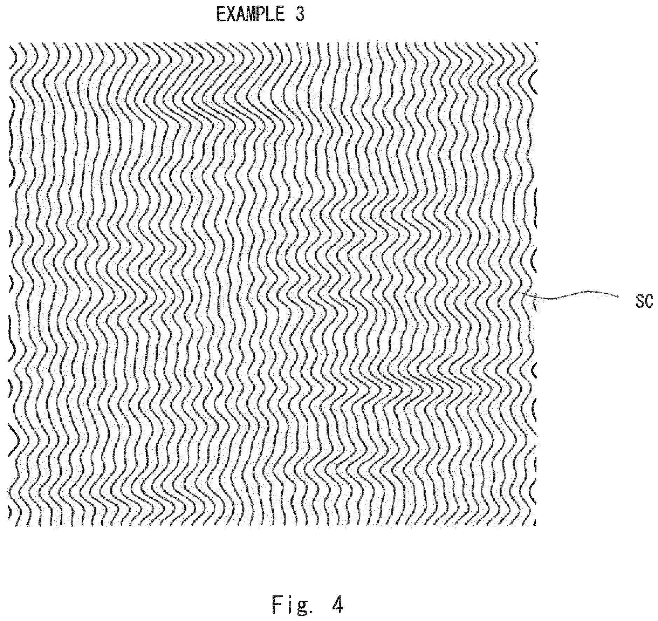

In the pattern shown in Fig. 4, as in the patterns shown in Figs. 2A and 3A, an operation to connect, with an x-th imaginary line, one specific pole point of the x-th (1≤x≤n-1) convex or concave section SC and one specific pole point of the (x+1)-th convex or concave section SC, which is closest to the specific pole point of the x-th convex or concave section, is repeated, considering any one specific pole point of the first convex or concave section SC as a starting point, until reaching one specific point of the n-th convex or concave section SC. At this time, the linear direction of the x-th imaginary line and the linear direction (linear angle) of the (x+1)-th imaginary line are different.

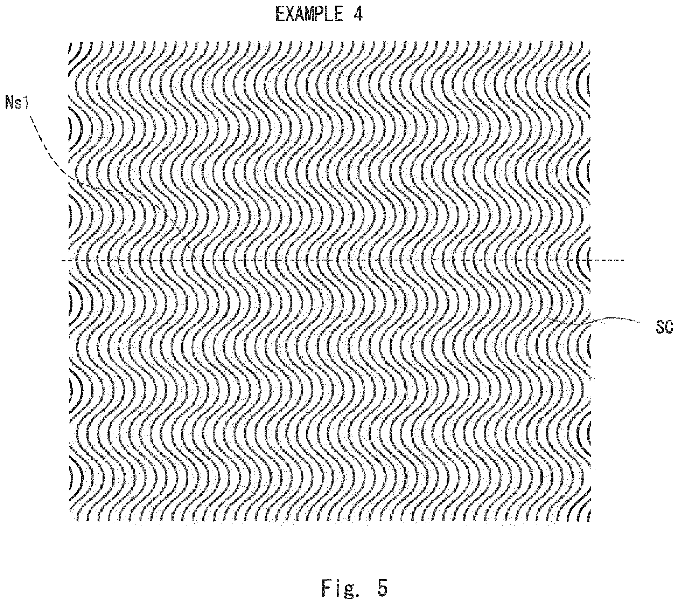

In the pattern shown in Fig. 5, an operation to connect, with an x-th imaginary line, one specific pole point of the x-th (1≤x≤n-1) convex or concave section SC and one specific pole point of the (x+1)-th convex or concave section SC, which is closest to the specific pole point of the x-th convex or concave section SC, is repeated, considering any one specific pole point of the first convex or concave section SC as a starting point, until reaching one specific point of the n-th convex or concave section SC. At this time, the linear direction of the x-th imaginary line and the linear direction (linear angle) of the (x+1)-th imaginary line are constant. Fig. 5 shows one imaginary line group Ns1 as an example. The imaginary line group Ns1 is one linear line, and the linear direction (linear angle) of the imaginary line is not changed.

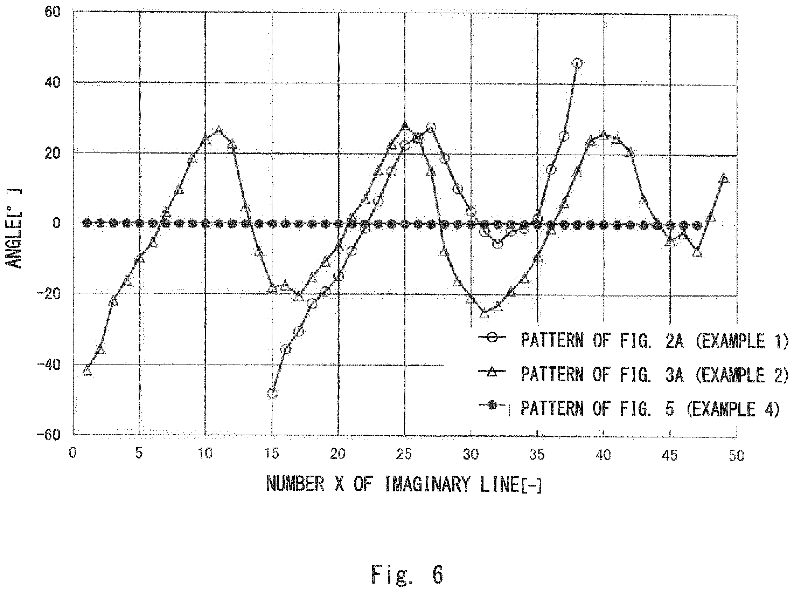

Fig. 6 is a graph showing an example of the relationship between the number x of an imaginary line and the angle of an imaginary line in any one imaginary line group in each of the patterns shown in Figs. 2A, 3A, and 5. For example, in the pattern shown in Fig. 2A, with respect to the imaginary line group Ls1 shown in Fig. 2B, the relationship between the number x of an imaginary line and the angle of an imaginary line is determined and shown in a graph.

Furthermore, passing through the above starting point, the angle [°] of each imaginary line is calculated within a range from -90° to 90°, using a direction vertical to a side of the imaginary rectangle to which the starting point belongs as a reference line with an angle of 0°.

As shown in Fig. 6, when the number x of the imaginary line is changed, an angle of the imaginary line is changed, in the patterns shown in Figs. 2A and 3A. In the patterns shown in Figs. 2A and 3A, the above graph includes one or more angle increasing portions where an angle increases as an increase in the x and one or more angle decreasing portions where an angle decreases as an increase in the x. In the pattern shown in Fig. 3A, the above graph includes two or more angle increasing portions and two or more angle decreasing portions.

As shown in Fig. 6, a change in the angle of an imaginary line is not observed even if the number x of an imaginary line is changed in the pattern shown in Fig. 5.

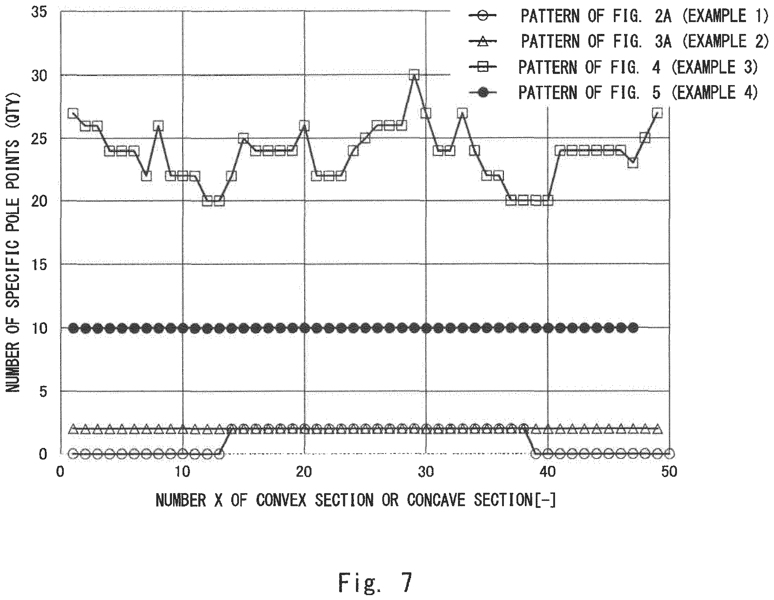

Fig. 7 is a graph showing an example of the relationship between the number x of a convex or a concave section and the number of specific pole points included in one convex or one concave section regarding the each of the patterns shown in Figs. 2A, 3A, 4, and 5.

It is preferable that in an uneven layer, the numbers of specific pole points from a first to an n-th convex or concave section at least partially vary in plan view. In the patterns shown in Figs. 2A and 4, the numbers of specific pole points from a first to an n-th convex or concave section at least partially vary in plan view. In an uneven layer, the number of specific pole points of the at least one convex or concave section is preferably three or more in plan view. For example, the pattern in Fig. 4 shows that the numbers of specific pole points of three or more convex or concave sections vary in plan view, which is preferable.

### [Layered Body]

A layered body of the present invention includes the above-mentioned uneven structural body of the present invention.

### (First Embodiment)

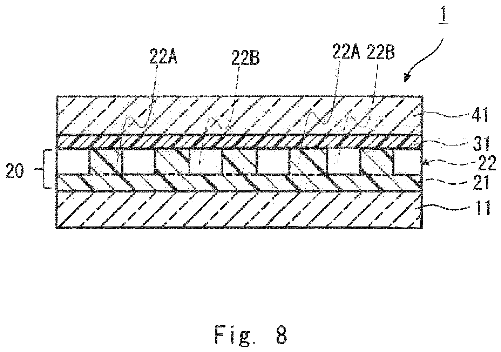

With reference to the accompanying drawings, an uneven structural body and a layered body including the uneven structural body of a first embodiment according to the present invention are described. Fig. 8 is a schematic cross-sectional view of a layered body of the embodiment.

A layered body 1 in the embodiment includes an uneven structural body 20 in one embodiment according to the present invention.

The uneven structural body 20 consists of a first flat layer 21 and an uneven layer 22 integrally molded with the first flat layer 21. The uneven layer 22 consists of a plurality of convex sections 22A and a plurality of concave sections 22B formed in the gaps of the plurality of convex sections 22A. In the embodiment, a second flat layer 31 is stacked directly above the uneven layer 22 leaving the spaces in the concave sections 22B of the uneven layer 22 as gas portions.

The uneven layer 22 is preferably a gas resin composite multilayer including a plurality of gas portions formed in the plurality of concave sections 22B and a plurality of resin portions (a plurality of convex sections) for isolating the plurality of gas portions from each other. Preferably, the first flat layer 21 is a first resin layer, the second flat layer 31 is a second resin layer, and a gas resin composite multilayer is preferably interposed between these two flat resin layers.

In the embodiment, the plurality of convex sections 22A or the plurality of concave sections 22B are formed by the above-mentioned plan patterns fulfilling the provisions of an uneven layer of an uneven structural body of the present invention. The plan patterns of the plurality of convex sections 22A or the plurality of concave sections 22B, for example, may be a pattern illustrated in Figs. 2A, 3A, or 4.

At least one of the first flat layer 21 and the second flat layer 31 has translucency. Of the first flat layer 21 and the second flat layer 31, at least a resin layer positioned on the visible side of the uneven layer 22 has translucency. At least one of the first flat layer 21 and the second flat layer 31 may be a layer including an adhesive layer.

The layered body 1 in the embodiment is suitable for design. A user or an observer may observe the layered body 1 from the side of a translucent layer of the first flat layer 21 and the second flat layer 31. The light incident on the layered body 1 is reflected at an interface between the first flat layer 21 and the gas portions (the spaces in the concave sections 22B), at an interface between the convex sections 22A (preferably the resin portions) and gas portions, or at an interface between the gas portions and the second flat layer 31.

In the embodiment, the convex sections 22A or the concave sections 22B has meandering linear shapes in plan view and has anisotropic properties in plan view. Therefore, the uneven layer 22 involves reflection anisotropy with a different reflection factor depending on the direction.

The light incident on the uneven layer 22 from the side of a translucent layer of the first flat layer 21 and the second flat layer 31, is reflected mainly in the width direction of the gas portions and is hardly reflected in the length direction of the gas portions in plan view. In addition, in plan view, when the plurality of gas portions are formed at intervals, the contrast difference between the length direction of the gas portions and the width direction of the gas portions will become greater. In the embodiment, when an angle of a layered body, a visual line or a light source changes, a different brightness change according to the in-plane position leads to a variety of changes in contrast.

For example, in terms of an observational aspect from a user or an observer, the directions of a length and a width of the gas portions are made to be in the horizontal and vertical directions, respectively, and the layered body is rotated to the right and left within a range from -45° to 45° with the vertical direction as the axis passing through the center of horizontal direction. At this time, a contrast is remarkably changed and designability is improved.

As described in the [An Uneven Structural Body] section, in the uneven layer, in plan view,
the plurality of convex sections 22A or concave sections 22B are formed to be aligned, at a pitch of no more than 1000 um, preferably 100 um or less, from a first to an n-th convex section 22A or concave section 22B,
the n is an integer greater than or equal to 10,
if an operation to connect, with an x-th imaginary line, one specific pole point of the x-th (1≤x≤n-1) convex section 22A or concave section 22B and one specific pole point of the (x+1)-th convex section 22A or concave section 22B, which is closest to the specific pole point of the x-th convex section 22A or concave section 22B, is repeated, considering any one specific pole point of the first convex section 22A or concave section 22B as a starting point, until reaching one specific point of the n-th convex or concave section, the linear direction of the x-th imaginary line and the linear direction of the (x+1)-th imaginary line are designed to be different from each other.

With such design, when the angle of an uneven structural body or a layered body including the uneven structural body, a visual line or a light source changes, a different brightness change according to the in-plane position leads to a variety of changes in contrast. A more complexed change in the contrast leads to a more stereoscopic visualization and a more complexed change in the appearance. Thus, a structure with a more superior designability can be provided.

As described in the [An Uneven Structural Body] section, the uneven layer 22 is preferably designed such that as plan view, passing through the above starting point, the angle [°] of each imaginary line is calculated within a range from -90° to 90°, using a direction vertical to a side of the imaginary rectangle to which the starting point belongs as a reference line with an angle of 0°, and when a graph showing the relationship between the number x of an imaginary line and the angle of an imaginary line is acquired, the graph includes one or more angle increasing portions where an angle increases as an increase in the x and one or more angle decreasing portions where an angle decreases as an increase in the x.

Preferably, the above-mentioned graph includes two or more angle increasing portions and two or more angle decreasing portions.

With such design, when the angle of an uneven structural body or a layered body including the uneven structural body, a visual line or a light source changes, a different brightness change according to the in-plane position leads to a variety of changes in contrast. A more complexed change in the contrast leads to a more stereoscopic visualization and a more complexed change in the appearance. Thus, a structure with a more superior designability can be provided.

In the uneven layer 22, preferably, the numbers of specific pole points from a first to an n-th convex section 22A or concave section 22B at least partially vary in plan view. Preferably, in the uneven layer 22, the number of specific pole points related to at least one convex section 22A or one concave section 22B is three or more in plan view.

With such design, when the angle of an uneven structural body or a layered body including the uneven structural body, a visual line or a light source changes, a different brightness change according to the in-plane position leads to a variety of changes in contrast. A more complexed change in the contrast leads to a more stereoscopic visualization and a more complexed change in the appearance. Thus, a structure with a more superior designability can be provided.

In an aspect shown in Fig. 8, all of the convex sections 22A are integrally molded with the first flat layer 21 at the lower side on the drawing, however, at least a part of the convex sections 22A may be integrally molded with the second flat layer 31 at the upper side on the drawing.

The layered body 1 may include a resin-made or a glass-made supporting member 11 supporting the first flat layer 21 and/or a resin-made or a glass-made supporting member 41 supporting the second flat layer 31, as necessary.

A material for the supporting members 11, 41, is not particularly limited, and examples include a resin plate, a resin film, a glass plate, and combinations thereof. The supporting members 11, 41 may be a single-layer structure or a layered structure or may have been subjected to a treatment such as a surface treatment. At least the supporting member on the visible side has translucency.

A resin constituting a resin plate or a resin film is not particularly limited, and examples include an acrylic resin; a vinyl chloride resin; a carbonate resin; an epoxy resin; an olefin resin such as polyethylene and polypropylene; a styrol resin; a styrene-based resin such as ABS resin; an amide-based resin such as nylon; a fluorine-based resin; a phenolic resin; a melamine resin; an ester resin such as polyethylene terephthalate (PET), and combinations thereof.

A known glass plate may be used, and examples include soda lime glass, borosilicate glass, aluminosilicate glass, quartz glass, sapphire glass, and alkali-free glass. A glass plate may have been subjected to a known surface treatment, for example, antireflection treatment (AR), antiglare layer (AG), fingerprint prevention (AFP) treatment, antifouling treatment, and antibacterial treatment or the like. A glass plate may have been subjected to a known secondary processing of reinforcing or the like.

In order to prevent reflection at an interface between the supporting member 11 and the first flat layer 21, a refractive index difference between the supporting member 11 and the first flat layer 21 is preferably small. Similarly, to prevent reflection at an interface between the second flat layer 31 and the supporting member 41, a refractive index difference between the second flat layer 31 and the supporting member 41 is preferably small. A refractive index difference between the supporting member 11 and the first flat layer 21 as well as a refractive index difference between the second flat layer 31 and the supporting member 41 are both preferably within 0.3, more preferably within 0.2, particularly preferably within 0.1, and most preferably within 0.05.

In the embodiment, the uneven structural body 20 is preferably composed of a translucent resin and the first flat layer 21 included in the uneven structural body 20 preferably has translucency. The visible light transmittance of the uneven structural body 20 is preferably 70% or more, more preferably 80% or more, and particularly preferably 90% or more. In this specification, unless otherwise indicated, the visible light transmittance shall be measured in accordance with JIS R 3106 (1998). Preferably, the layered body 1 may include a translucent resin-made supporting member 11 supporting the first flat layer 21 on the outer surface of the uneven structural body 20 (the surface opposite to the uneven surface).

The uneven structural body 20 may be manufactured by a known method.

For example, the uneven structural body 20 with a desired uneven pattern may be manufactured in a manner such that a mold with a reversed pattern for an uneven pattern of the uneven structural body 20 is prepared, a liquid curable composition containing a precursor of a translucent resin such as a monomer, an oligomer, and a prepolymer is applied on the mold, the curable composition is cured by heating or irradiation with an active energy ray such as ultraviolet light and electron beam, and the molded uneven structural body 20 is released from a molding die. Alternatively, the molded uneven structural body 20 may be released together with the supporting member 11 from a molding die by overlapping the supporting member 11 of a resin film or the like on a curable composition applied on a mold to cure the curable composition.

Alternatively, the uneven structural body 20 with a desired uneven pattern may be manufactured by a method of pressing a molding die with a reversed pattern for an uneven pattern of the uneven structural body 20 to a pre-prepared flat translucent resin film and heating the translucent resin film. The heating timing of a translucent resin film may be before it is pressed by a molding die. The supporting member 11 may be stacked on a flat translucent resin film in advance or may be stacked on the produced uneven structural body 20.

The second flat layer 31 is, for example, a layer including an adhesive layer and a translucent layer. The layered body 1 may include a translucent resin - made supporting member 41 supporting the second flat layer 31 on the outer surface (the surface opposite to the uneven layer 22) of the second flat layer 31.

For example, a known adhesive sheet in which a releasable protective film is stacked on both surfaces of an adhesive layer is prepared, and one protective film is released from the adhesive sheet to expose the adhesive layer. Then the exposed adhesive layer side of the adhesive sheet can be bonded on the uneven surface of the uneven structural body 20. In the method, the remaining protective film of the adhesive sheet serves as the supporting member 41.

After the above-mentioned bonding is completed, the other remaining protective film may be released to bond another resin film or a glass plate on the exposed adhesive layer as the supporting member 41.

An adhesive sheet is not particularly limited, and a known adhesive sheet using an adhesive agent of acrylic-based, urethane-based, and silicone-based or the like, may be used.

An adhesive layer may be cured by heating or irradiation with an active energy ray such as ultraviolet light and electron beam after being stacked on the uneven surface of the uneven structural body 20 in a liquid or a semi-cured state.

Incidentally, when the second flat layer 31 is an adhesive layer, the supporting member 41 may also be attached/detached or exchanged.

For the second flat layer 31 and the supporting member 41, an adhesive tape which an adhesive layer is stacked on one side of a resin substrate composed of a resin of Polyethylene terephthalate (PET) or the like may be used. In this case, an adhesive layer serves as the second flat layer 31 while a resin substrate serves as the supporting member 41. A colored resin substrate may be used to improve designability.

When the second flat layer 31 includes an adhesive layer, the adhesive layer is preferably thinner than the uneven layer 22. If an adhesive layer included in the second flat layer 31 is thinner than the uneven layer 22, it is suppressed that the first flat layer 21 and the second flat layer 31 adhere to each other and the gas portions (the spaces in the concave sections 22B) collapse and get small, even with an external force. Thus, the reduction of the reflection intensity is prevented. The thickness ratio of an adhesive layer included in the second flat layer 31 to the thickness of the uneven layer 22 (an adhesive layer included in the second flat layer 31/the uneven layer 22) is preferably less than 1.0, more preferably 0.7 or less, and particularly preferably 0.5 or less. The lower limit of the thickness ratio is not particularly limited and is preferably 0.1 or more.

The thickness of the second flat layer 31 is not particularly limited and is preferably 100 µm or less, more preferably 30 µm or less, particularly preferably 10 µm or less, and most preferably 5 µm or less. The lower limit of the thickness is not particularly limited and is preferably 1 µm or more.

The convex sections 22A may not be integrally molded with the first flat layer 21 or the second flat layer 31. Instead of using an integral molding, a method of forming one or more convex sections 22A on the pre-prepared first flat layer 21 and/or the second flat layer 31 is not particularly limited, and a common printing method of a flexographic printing, an offset printing, a gravure printing, and a screen printing or the like, are given. For a printing, for example, a photocurable ink containing a photocuring resin (an ultraviolet (UV) curing ink or the like) may be used. For example, a UV printer "UJF-6042MkII" manufactured by MIMAKI ENGINEERING CO., LTD. may be used to print one or more convex sections 22A (the resin portions) on a translucent resin film serving as a resin layer. In the method, a printing ink made of a material at a low cost enables one or more convex sections 22A to be formed with a simple process.

The layered body 1 in the embodiment is not provided with a reflective layer along an uneven surface. However, since only gas is present in the concave of the uneven structural body 20, a refractive index difference between the gas and the material (the first flat layer or the second flat layer) in contact with the gas can be largely secured. Thereby, the reflection intensity can be increased as in the case of providing a reflective layer along an uneven surface. Further, the layered body 1 does not need to be provided with a reflective layer along an uneven surface, however, may be provided with a reflective layer along an uneven surface as necessary.

### (Second and Third Embodiments)

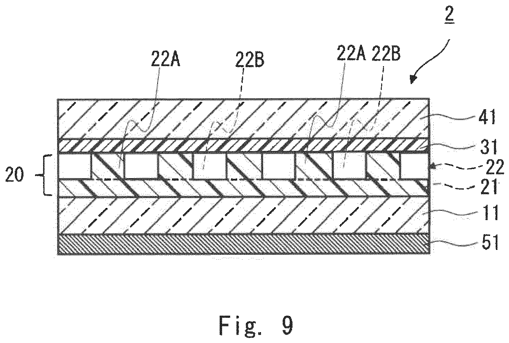

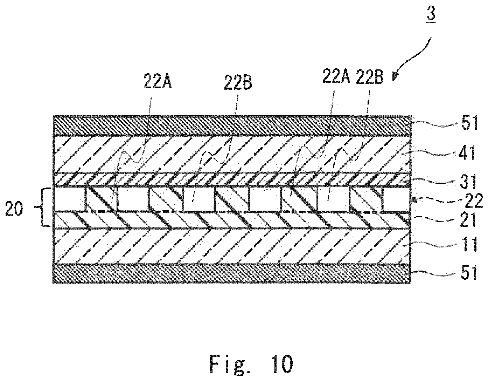

Figs. 9 and 10 are schematic cross-sectional views of the layered bodies of the second and third embodiments according to the present invention, respectively. Components that are the same as those of the first embodiment are denoted by the same reference numerals, and the descriptions are omitted.

A layered body 2 of the second embodiment is configured such that one decorative layer 51 is added to the layered body 1 of the first embodiment. In the illustrated example, the decorative layer 51 is provided on the outer surface of the supporting member 11 (the surface opposite to the uneven structural body 20), the formed portion and the number may be appropriately designed.

A layered body 3 of the third embodiment is configured such that the decorative layer 51 is added to each of the upper side and the lower side of the uneven layer 22 of the layered body 1 of the first embodiment. In the illustrated example, the decorative layer 51 are provided on the outer surface of the supporting member 11 (the surface opposite to the uneven structural body 20) and the outer surface of the supporting member 41 (the surface opposite to the uneven structural body 20), however, the formed portion may be appropriately designed. The layered body of the present invention may include three or more decorative layers.

The decorative layer 51 is a layer for enhancing designability and a layer including a color, a design pattern, a pattern or the like. A method of forming the decorative layer 51 is not particularly limited, a common printing method and the like of a flexographic printing, an offset printing, a gravure printing, and a screen printing or the like, are given. For example, a method of printing through a known method of a screen printing and an inkjet printing or the like using a photocurable ink containing a photocuring resin is preferred. The decorative layer 51, for example, may be a black-and-white or a color printing layer. For example, by printing a wood grain pattern as the decorative layer 51, it is possible to provide a layered body in which wood is used at a low cost without using wood requiring natural material at a high cost.

The layered bodies 2, 3 of the second and third embodiments include similar basic configurations to the layered body 1 of the first embodiment and achieves an action effect similar to the layered body 1 of the first embodiment. The layered bodies 2, 3 of the second and third embodiments include one or more decorative layers 51, thereby further enhancing designability.

### (Fourth Embodiment)

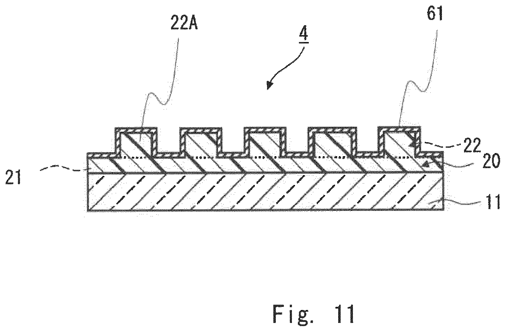

Fig. 11 is a schematic cross-sectional view of a layered body of the fourth embodiment according to the present invention. Components that are the same as those of the first embodiment are denoted by the same reference numerals, and the descriptions are omitted.

A layered body 4 in the embodiment is configured such that a reflective layer 61 is formed along an uneven surface of the uneven layer 22 of the uneven structural body 20 formed on the supporting member 11. By providing the reflective layer 61 along the uneven surface, the intensity of the reflected light is increased, thus designability is improved.

The reflective layer 61 preferably contains a high refractive index material having a refractive index difference of 0.4 or more from that of the uneven layer 22 and/or a metal. The reflective layer preferably includes at least one type of metal selected from the group consisting of A1 and Ag, and/or at least one type of high refractive index material selected from the group consisting of TiO₂, Nb₂O₅, ZnO, ZnS, and ZrO₂.

The layered body 4 may add one or more decorative layers the same as the second and third embodiments.

### (Design Change Example of Fourth Embodiment)

In the layered body 4 of the fourth embodiment, a black layer formed using a black ink may be provided instead of the reflective layer 61. The black layer, for example, may be formed by using a black ink disclosed in Japanese Unexamined Patent Application Publication No. 2019-18426. The black layer absorbs light and assumes a black color. When a layered body including a black layer is used for a decorative application of a display apparatus, light leakage is then suppressed, which is preferable.

Preferably, a black ink contains a black pigment and a binder resin.

A black pigment may be an inorganic pigment or an organic pigment, and for example, carbon black, graphite, titanium black, and carbon nanotube or the like, are given.

A binder resin is used for dispersing a black pigment and forming a coating film.

As a binder resin, a vinyl chloride-vinyl acetate copolymer resin, an acrylic resin, and a polyester resin or the like, is preferred.

The mass ratio of a black pigment and a binder resin in the black layer is not particularly limited and is preferably 0.2:5 to 8:5 from the viewpoint of increasing the contrast between light and shadow.

A black layer formed by the method described below using a black ink preferably has a surface gloss value of 80 or more measured at a measuring angle of 60° in accordance with JISZ8741 (1997), and a surface lightness L^{∗} value of 10 or less in CIE1976 (L^{∗}, a^{∗}, b^{∗}) color system measured by SCE method. A forming method of a black layer: A black ink is applied onto a polyethylene terephthalate (PET) film under a condition of a moving speed of 50 mm/sec using a bar coater having a wire diameter of 6 mils. Then, the black ink is heated and dried at 80°C for 15 minutes.

The black layer may be a layered structure of a first black layer having a surface gloss value of 80 or more measured at a measuring angle of 60° in accordance with JISZ8741 (1997) and a second black layer having a surface gloss value larger than that of the first black layer. When a layered body is used in a decorative application of a display apparatus, light leakage is then suppressed, which is preferable.

### (Fifth Embodiment)

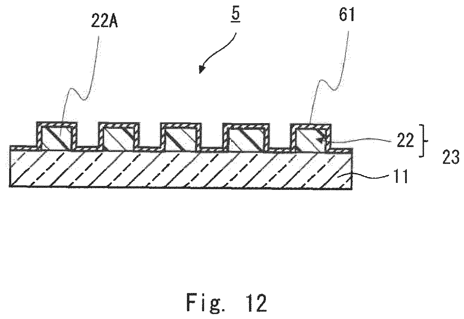

Fig. 12 is a schematic cross-sectional view of a layered body of the fifth embodiment according to the present invention. Components that are the same as those of the fourth embodiment are denoted by the same reference numerals, and the descriptions are omitted.

A layered body 5 in the embodiment is configured such that the plurality of convex sections 22A are directly formed on the supporting member 11, without the first flat layer 21 on the supporting member 11. In the embodiment, the uneven layer 22 consisting of the plurality of convex sections 22A and the plurality of concave sections 22B (The reference numeral 22B is not shown in Fig. 12. See Fig. 8 and the like.) formed in the gaps of the plurality of convex sections 22A, is formed on the supporting member 11.

A method of manufacturing an uneven structural body 23 is not particularly limited.

For example, the uneven structural body 23 with a desired uneven pattern may be manufactured in a manner such that the plurality of convex sections 22A in a desired pattern are printed on the supporting member 11 using an inkjet printing method with a liquid curable composition containing a precursor of a translucent resin such as a monomer, an oligomer, and a prepolymer, and then are cured by heating or irradiation with an active energy ray such as ultraviolet light and electron beam.

Alternatively, the uneven structural body 23 with a desired uneven pattern may be manufactured in a manner such that a liquid curable composition containing a precursor of a translucent resin such as a monomer, an oligomer, and a prepolymer are printed on the supporting member 11 using a screen-printing method using a silk screen printing plate corresponding to a pattern of the plurality of the convex sections 22A, and then are cured by heating or irradiation with an active energy ray such as ultraviolet light and electron beam.

A layered body 5 in the embodiment is configured to have the uneven structural body 23 consisting of the supporting member 11 and the uneven layer 22, and have the reflective layer 61 formed along an uneven surface on the uneven structural body 23. As in the case of the fourth embodiment, in the embodiment, by providing the reflective layer 61 along the uneven surface, the intensity of the reflected light is increased, thus designability is improved.

In the same way as the Design Change Example of the Fourth Embodiment, a black layer may be provided instead of the reflective layer 61. When a layered body including a black layer is used for a decorative application of a display apparatus, light leakage is then suppressed, which is preferable.

The designs of the layered bodies 1 to 5 in the first to fifth embodiments can be changed as needed, as long as such layered body does not deviate from a gist of the prevent invention.

Each component of the layered bodies 1 to 5 may include any additive as needed.

At least one component of the layered bodies 1, 4, and 5 may include a coloring agent as needed.

At least one component other than the decorative layers 51 of the layered bodies 2, 3 may include a coloring agent as needed. In such case, the layered bodies 2, 3 may assume a color in which a color of the decorative layer 51 and a color of the coloring agent contained in the other components are combined. Combining freely a color of the decorative layer 51 and a color of the coloring agent contained in the other components allows for the increased degree of freedom in design, making it possible to develop color variations. A known coloring agent may be used, and a pigment, a dye, and their combination are given.

The outermost layers of the visual sides in the layered bodies 1 to 5 may include an ultraviolet (UV) absorber as necessary. The UV absorber can prevent the deterioration in the uneven structural body 20 or the like caused by ultraviolet ray.

The layered bodies 1 to 5 may include any component other than the above components as needed.

As described above, according to the present invention, when the angle of an uneven structural body or a layered body including the uneven structural body, a visual line or a light source changes, a different brightness change according to the in-plane position leads to a variety of changes in contrast. A more complexed change in the contrast leads to a more stereoscopic visualization and a more complexed change in the appearance. Thus, a structure with a more superior designability can be provided.

### Examples

Hereinafter, the present invention is described based on the examples, however, the present invention is not limited to them. Examples 1 to 3 and Examples 5 to 10 are examples, while Example 4 is a comparative example.

### [Material]

The abbreviations used in each example are shown below.

### <Metal Plate for Mold>

(M1) Ni metal plate (length 10 cm × width 10 cm × thickness 5 mm, manufactured by The Nilaco Corporation)

### <Mold Release Agent>

(RA1) "Optool HD-2100" manufactured by DAIKIN INDUSTRIES, LTD.,

### <Curable Composition>

(R1) Tricyclodecanol acrylate ("A-DCP" manufactured by SHIN-NAKAMURA CHEMICAL CO, LTD.), urethane acrylate ("UA-122P" manufactured by SHIN-NAKAMURA CHEMICAL CO, LTD.), and 1-hydroxycyclohexyl phenyl ketone ("IRGACURE184" manufactured by BASF) were mixed with a mass ratio of 50:50: 1 to form an ultraviolet curable composition,
(R2) Transparent adhesive ("PHOTOBOND" manufactured by Sunrise MSI),
(R3) Black ink ("BLL Y1937" manufactured by Seiko advance Ltd. and "D curing agent" manufactured by Seiko advance Ltd. were mixed with a mass ratio of 100:10), and
(R4) Black ink ("BLL Y1938" manufactured by Seiko advance Ltd. and "VF curing agent" manufactured by Seiko advance Ltd. were mixed with a mass ratio of 100:2, where a gloss value is larger than a black ink (R3)).

### <Translucent Resin Film>

(F1) Polyethylene terephthalate (PET) film (length 10 cm × width 10 cm × thickness 125 µm, manufactured by PrinterPaperPro)

### <Adhesive Sheet>

(A1) Transparent adhesive sheet (length 10 cm × width 10 cm × thickness 25 µm, "MHM-FWD25" manufactured by Nichiei Kako Co., Ltd.) with a peelable protective film (polyethylene terephthalate (PET) film of a thickness 50 µm) laminated on both sides of the acrylic adhesive layer
(T1) Transparent adhesive tape (length 10 cm × width 10 cm, a total thickness of 10 µm (a thickness of the adhesive layer: 4 µm, a thickness of a substrate PET film: 6 µm), "GL10" manufactured by Nichiei Kako Co., Ltd.)

### <Glass Plate>

(G1) Float glass plate (length 10 cm × width 10 cm × thickness 1.8 mm, a refractive index of 1.52, "FL2" manufactured by AGC Inc.)

### [Examples 1 to 4]

### (Manufacture of Mold)

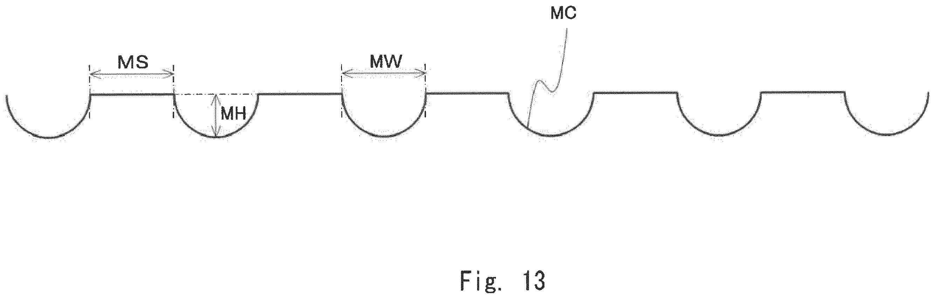

In each of the Examples 1 to 4, molds (MM) ((MM1) to (MM4)) having uneven structural surfaces consisting of a plurality of concave sections and a plurality of convex sections formed in the gaps between these plurality of concave sections with a meandering linear shape in plan view and a semicircular shape in cross sectional view were obtained by machining Ni metal plate (M1) through a known drilling. The plan patterns of a plurality concave sections are schematically shown in Figs. 2A, 3A, 4, or 5. Fig. 13 is a schematic cross-sectional view of an arranged direction of a plurality of concave sections. In the figure, a reference sign MC shows a concave section of a mold.

The molds (MM) include a reversed pattern for an uneven surface pattern of an uneven structural body to be manufactured. The following shows the Example numbers, mold numbers, and plan patterns of a plurality of concave sections.
(MM1): Example 1 and a pattern shown Fig. 2A;
(MM2): Example 2 and a pattern shown Fig. 3A;
(MM3): Example 3 and a pattern shown Fig. 4; and
(MM4): Example 4 and a pattern shown Fig. 5.

For details of each pattern, see the section of Description of Embodiments. See also Fig. 6, which is a graph showing an example of the relationship between a number x of an imaginary line and an angle of an imaginary line and Fig. 7, which is a graph showing an example of the relationship between a number x of a convex or a concave section and the number of specific pole points included in one convex or one concave section in each of the patterns shown in Figs. 2A, 3A, 4, and 5.

The designs in these examples are as follows. In a plan pattern shown in the figure, the both upper- and lower-line ends of a plurality of concave sections that extend while meandering in the vertical direction in the figure, is referred to as both line ends of a plurality of concave sections. The same applies to a plurality of convex sections of the uneven structural body to be obtained. In the present invention, in order to at least partially change a pitch of a plurality of convex or concave sections, concerning a distance and a pitch between the concave sections on a mold as well as a distance and a pitch between the convex sections on an uneven structural body, unless otherwise specified, the data of "both line ends " is provided. Note that in the plan pattern in the figure, a pitch is shown larger than its actual pattern to make it easy to see.

A width (MW) of a concave section (corresponding to a width (RW) of a convex section of an uneven structural body): fixed to 30 µm

A depth (MH) of a concave section (corresponding to a height (RH) of a convex section of an uneven structural body): fixed to 15 µm (half of the width of a concave section)

A distance (MS) between the concave sections on both line ends of a plurality of concave sections (corresponding to a distance (RS) between the convex sections on both line ends on a plurality convex sections of an uneven structural body: fixed to 30 µm

Pitches (MW+MS) of both line ends on a plurality of concave sections (corresponding to pitches (RW+RS) on both line ends on a plurality of convex sections of an uneven structural body: fixed to 60 µm

### (Molding of Uneven Structural Body)

In each of the Examples 1 to 4, the molds (MM) ((MM1) to (MM4)) obtained were used to mold uneven structural bodies (S) ((S1) to (S4)).

On the whole surface of the molds (MM), a 1 g of Release Agent (RA1) was applied and was dried at 80°C for 30 minutes. Thereafter, a 5 g of curable composition (R1) was applied on the whole surfaces on the molds to which the release agent (RA1) was applied. In the process, the curable composition (R1) applied so as to fill all of the concave sections formed in the molds and further to form layers on the molds. Then, a PET film (F1) as a supporting member was laminated on a layer composed of the curable composition (R1) to prevent air bubbles from entering. Next, from the PET film (F1) side, the curable composition (R1) was irradiated with ultraviolet ray (365 nm) at an illuminance of 100 mW/m² for 10 seconds for curing using "UVLED" manufactured by CCS Inc.

By the above-mentioned procedure, the resin-made uneven structural bodies (S) ((S1) to (S4)) having uneven structural surfaces consisting of a plurality of convex sections and a plurality of concave sections formed in the gaps between these plurality of convex sections with a meandering linear shape in plan view and a semicircular shape in cross sectional view, were molded. The plan patterns of a plurality of convex sections of the obtained uneven structural bodies (S) ((S1) to (S4)) are the patterns schematically shown in Figs. 2A (Example 1), 3A (Example 2), 4 (Example 3), or 5 (Example 4). The width (RW) of a convex section, the height (RH) of a convex section, the distance (RS) between the convex sections, and the pitches (RW+RS) of a convex section respectively correspond to the width (MW) of a concave section, the depth (MH) of a concave section, the distance (MS) between the concave sections, and the pitches (MW+MS) of a concave section of the mold (MM) used. Table 1 shows these data. Note that a height of a convex section on the uneven structural bodies (S) obtained in the process is referred to as a height at the time of molding. The distance (RS) between the convex sections and the pitches (RW+RS) of a convex section in the table are data of both line ends.

### (Manufacture of First Layered Body)

The first layered bodies (LA) ((LA1) to (LA4)) (layered structures: the uneven structural bodies (S) ((S1) to (S4)) /PET film (F1) (a supporting member)) with the uneven structural bodies (S) (cured products of curable composition) stacked on the PET film (F1), which is a supporting member, were released from the molds (MM).

For a cross-sectional structure of the uneven structural bodies, see reference numerals 20 and 11 in Fig. 8. However, note that the cross section of a convex section at this point has a semicircular shape.

### (Manufacture of Second Layered Body)

An adhesive tape (T1) was adhered on the first layered bodies (LA) ((LA1) to (LA4)) by stacking an adhesive layer of the adhesive tape (T1) on the uneven surfaces of the uneven structural bodies (S) ((S1) to (S4)) of the first layered bodies (LA) ((LA1) to (LA4)) and by rolling a rubber roller over the uneven surfaces while pressing the rubber roll. At that time, the adhesive tape (T1) was adhered on the first layered bodies (LA) in a flat manner so as to leave the spaces in the plurality of the concave sections formed on the surfaces of the uneven structural bodies (S) as gas portions. Thus, second layered bodies (LB) ((LB1) to (LB4)) (layered structures: adhesive tape (T1)/the uneven structural bodies (S) ((S1) to (S4))/PET film (F1) (a supporting member)) including a gas resin composite multilayer, were obtained.

The second layered bodies (LB) include a cross-sectional structure shown in Fig. 8. Note that as shown in the figure, during the layering process, a head of convex section with a semicircular shape in cross sectional view of the uneven structural body was pressurized and was flattened. As a result, the height (RH) of a convex section was changed from 15 µm at the time of molding to 13 µm. The height of a convex section of the second layered bodies (LB) obtained in the course of the process is referred to as a height after pressurizing.

In addition, regarding a gas resin composite multilayer included in the second layered structural bodies (LB), a width of a resin portion is a width (RW) of a convex section, whereas a width (GW) of a gas portion is a distance (RS) between the convex sections.

The height (RH) of a convex section and a width (GW) of a gas portion after stacking are shown in Table 1. The width (GW) of a gas portion in the table represents data of both line ends.

### (Manufacture of Third Layered Body)

Third layered bodies (LC) ((LC1) to (LC4)) (layered structures: an adhesive tape (T1)/the uneven structural bodies (S) ((S1) to (S4))/PET film (F1) (a supporting member)/adhesive sheet (A1)) in which an adhesive sheet (A1) is adhered to the second layered bodies (LB) ((LB1) to (LB4)) were obtained by peeling a protective film on one side of the adhesive sheet (A1), stacking the exposed adhesive layer on the PET film (F1) of the second layered bodies (LB) ((LB1) to (LB4)), and rolling a rubber roller over the surfaces with the PET film (F1) while pressing the rubber roll.

### (Manufacture of Fourth Layered Body)

Fourth layered bodies (LD) ((LD1) to (LD4)) (layered structures: adhesive tape (T1)/the uneven structural bodies (S) ((S1) to (S4)) /PET film (F1) (a supporting member)/the adhesive layer of an adhesive sheet (A1)/a glass plate (G1)) was manufactured by peeling a protective film on the other side of the adhesive sheet (A1) of the third layered bodies (LC) ((LC1) to (LC4)) and adhering the glass plate (G1) on the exposed adhesive layer.

### (Evaluation of Layered Body)

In each of the Examples 1 to 4, the fourth layered bodies (LD) (((LD1) to (LD4)) obtained from a glass plate side were observed while changing the direction of the layered bodies.

The evaluation results are shown in Table 1. The appearance with respect to designability including a contrast change and a stereoscopic visualization feeling and the like, was visually determined based on a three-level scale: Excellent; Good; and Poor.

In the all examples, a change in the brightness was different according to the in-plane position. As a result, a variety of changes in contrast were observed.

In these examples, since each convex section has a meandering linear shape in plan view and anisotropic properties in plan view, an uneven layer (a gas resin composite multilayer) involves reflection anisotropy with a different reflection factor depending on the direction.

The light incident on an uneven layer (a gas resin composite multilayer) is reflected mainly in the width direction of a gas portion and is hardly reflected in the length direction of a gas portion in plan view. In addition, in plan view, when the plurality of gas portions are formed at intervals, the contrast difference between the length direction of the gas portions and the width direction of the gas portions will become greater. In these examples, when the angle of a layered body, a visual line or a light source was changed, a different brightness change according to the in-plane position led to a variety of changes in contrast.

In these examples, in terms of an observational aspect from an observer, the directions of a width and a length of the gas portions were made to be in the vertical and horizontal directions, respectively, and the layered body was rotated to the right and left within a range from -45° to 45° with the vertical direction as the axis passing through the center of horizontal direction. At this time, the change in contrast was remarkable, and they looked stereoscopic like a mountain chain in which mountains and valleys were in a row.

Compared to the fourth layered body (LD4) obtained in Example 4, the fourth layered bodies (LD1) to (LD3) obtained in Examples 1 to 3 showed more complexed contrast changes, more stereoscopic visibility, more complexed changes in visibility, thereby a more superior designability.

As shown in Fig. 6, an uneven layer included in the fourth layered body (LD4) obtained in Example 4, shows no changes in an angle with respect to a number x of an imaginary line. In contrast, uneven layers included in the fourth layered bodies (LD1) to (LD3) obtained in Examples 1 to 3, shows a greater change in an angle with respect to a number x of an imaginary line and includes angle increasing portions where an angle increases as an increase in the number x of an imaginary line and angle decreasing portions where an angle decreases as an increase in the number x of an imaginary line.

In the graph shown in Fig. 6, it was found that it is preferable to include angle increasing portions where an angle increase with the increase in the number x of an imaginary line and angle decreasing portions where an angle decrease with the increase in the number x of and imaginary line. It was also found that the larger the number of angle-increasing portions and angle- decreasing portions, the better.

Moreover, as shown in Fig. 7, it was found that the numbers of specific pole points of convex sections preferably at least partially vary and the number of specific pole points of at least one convex section is preferably three or more.

In the graph shown in Fig. 7, an uneven layer included in the fourth layered body (LD3) obtained in Example 3 is changed when the number of specific pole points is three or more, which was considered to be particularly good in terms of designability due to the above-mentioned remarkable effect, in comparison with the fourth layered bodies (LD1) and (LD2) obtained in Examples 1 and 2.

**[Table 1]**

| Example | Uneven Structural Bodv (S) | First Layered Body (LA) | Second Layered Body (LB) | Third Layered Body (LC) | Fourth Layered Body (LD) | Convex Section of Uneven Structural Body | | | | | | Gas portion of Second Layered Bodv | Visual Inspection |
|---|---|---|---|---|---|---|---|---|---|---|---|---|---|
| | | | | | | Pattern | Width (RW) (µm) | Height (RH) (µm) | | Distance between convex sections (RS) (µm) | RW+R S (µm) | Width (GW) (µm) | |
| | | | | | | | | At the time of molding | After pressurizing | | | | |
| 1 | S1 | LA1 | LB1 | LC1 | LD1 | Fip. 2A | 30 | 15 | 13 | 30 | 60 | 30 | Good |
| 2 | S2 | LA2 | LB2 | LC2 | LD2 | Fig. 3A | 30 | 15 | 13 | 30 | 60 | 30 | Good |
| 3 | S3 | LA3 | LB3 | LC3 | LD3 | Fig 4 | 30 | 15 | 13 | 30 | 60 | 30 | Excellent |
| 4 | S4 | LA4 | LB4 | LC4 | LD4 | Fig. 5 | 30 | 15 | 13 | 30 | 60 | 30 | Poor |

### [Example 5]

### (Manufacture of Fifth Layered Body)

In the fourth layered body (LD3) in Example 3, the design was changed as follows.

In a method similar to Example 3, the second layered body (LB3) as shown in Fig. 8 was obtained. Then, a UV printer (UJF-6042MkII, manufactured by MIMAKI ENGINEERING CO., LTD.) was used to the outer surface (the surface opposite to an uneven structural body) of a PET film (F1) of the second layered body (LB3) to form a decorative layer of a colored printing with a woodgrain pattern. Thus, a layered body as shown in Fig. 9 was obtained. In a similar method as the fourth layered body (LD3) in Example 3, by stacking an adhesive layer of an adhesive sheet (A1) and a glass plate (G1) on the decorative layer of the obtained layered body, a fifth layered body (LE3) (a layered structure: an adhesive tape (T1)/an uneven structural body (S3)/PET film (F1) (a supporting member)/a decorative layer (a printing with woodgrain pattern)/an adhesive layer of an adhesive sheet (A1)/a glass plate (a supporting member)) was manufactured.

When the fifth layered body (LE3) was observed from a glass plate side while changing the direction of the layered body, a similar effect to the fourth layered body (LD3) in Example 3 was provided. Furthermore, in this example, the appearance looks like a real natural wood and a glass plate pasted together was obtained, and higher designability was obtained.

### [Example 6]

### (Manufacture of Sixth Layered Body)

In the fourth layered body (LD3) in Example 3, the design was changed as follows.

In a method similar to Example 3, the second layered body (LB3) as shown in Fig. 8 was obtained. Then, a UV printer (UJF-6042MkII, manufactured by MIMAKI ENGINEERING CO., LTD.) was used to the outer surface (the surface opposite to an uneven structural body) of a PET film (F1) of the second layered body (LB3) to form a decorative layer of a colored printing with magenta. Furthermore, in a similar method for the outer surface (the surface opposite to an adhesive layer) of an adhesive tape (T1), a decorative layer through a colored printing with cyan, white printing and black printing was formed. Thus, a layered body as shown in Fig. 10 was obtained. In a similar method as the fourth layered body (LD3) in Example 3, by stacking an adhesive layer of an adhesive sheet (A1) and a glass plate (G1) on the decorative layer on the PET film (F1) side of the obtained layered body, a sixth layered body (LF3) (a layered structure: a decorative layer (a colored printing with cyan, white printing and black printing)/ an adhesive tape (T1)/an uneven structural body (S3)/PET film (F1) (a supporting member)/a decorative layer (a printing with magenta)/an adhesive layer of an adhesive sheet (A1)/a glass plate (a supporting member)) was manufactured.

When the sixth layered body (LE3) was observed from a glass plate side while changing the direction of the layered body, a similar effect to the fourth layered body (LD3) in Example 3 was provided. Furthermore, in this example, the appearance of a complex purple that changes redness and bluish depending on the angle was obtained, and higher designability was obtained.

### [Example 7]

### (Manufacture of Seventh and Eighth Layered Bodies)

In the fourth layered body (LD3) in Example 3, the design was changed as follows.

In the same way as in Example 5 except that a decorative layer of blue colored printing was formed instead of the decorative layer of a woodgrain pattern printing, a seventh layered body (LG3) (a layered structure: an adhesive tape (T1)/an uneven structural body (S3)/PET film (F1) (a supporting member)/a decorative layer (a printing with blue)/an adhesive layer of an adhesive sheet (A1)/a glass plate (a supporting member)) was manufactured.

Then, a transparent adhesive (R2) was applied on a glass plate on the surface of a commercially available liquid crystal display, and an adhesive tape (T1) of the seventh layered body (LG3) was laminated on the glass plate in order for air bubbles not to let in on top of the glass plate as much as possible. Next, from the glass plate (G1) side of the seventh layered body (LG3), a transparent adhesive (R2) was irradiated with ultraviolet ray (365 nm) at an illuminance of 100 mW/m² for 10 seconds for curing using "UVLED" manufactured by CCS Inc., and an eighth layered body (LH3) (a layered structure: a liquid display/a transparent adhesive (R2)/an adhesive tape (T1)/an uneven structural body (S3)/PET film (F1) (a supporting member)/a decorative layer (a printing with blue)/an adhesive layer of an adhesive sheet (A1)/a glass plate (a supporting member)) was manufactured.

When the eighth layered body (LE3) was observed from a glass plate side while changing the direction of the layered body, a similar effect to the fourth layered body (LD3) in Example 3 was provided, and higher designability was obtained. Further, when the screen of a liquid crystal display was turned on, it was confirmed that the display of the screen was clearly visible through the glass of the layered body. With such a layered structure, a display having higher designability when turned off was obtained.

### [Example 8]

### (Manufacture of Ninth Layered Body)

In the first layered body (LA3) in Example 3, the design was changed as follows.

In a method similar to Example 3, the first layered body (LA3) was obtained. By a sputtering method, a 50 nm thickness of ZnS (refractive index: 2.3) as a reflective layer was formed on the uneven surface of the uneven structural body (S3) of the first layered body (LA3), and as shown in Fig. 11, a ninth layered body (LI3) (a layered structure: ZnS reflective layer/an uneven structural body (S3)/PET film (F1) (a supporting member)) was manufactured. Note that actually, a convex section has a semicircular cross section, which is different from a shape shown in figure.

When the ninth layered body (LI3) was observed from a PET film (F1) plate side while changing the direction of the layered body, a similar effect to the fourth layered body (LD3) in Example 3 was provided, and higher designability was obtained.

### [Example 9]

### (Manufacture of Tenth Layered Body)

By printing on the glass plate (G1) through a transparent ink using a UV printer (UJF-6042MkII, manufactured by MIMAKI ENGINEERING CO., LTD.), a plurality of convex sections in a plan pattern schematically shown in Fig. 4 was formed and a tenth layered body (LJ9) (a layered structure: a glass plate (G1)/an uneven layer) having a cross-sectional structure such as an uneven structural body 23 schematically shown in Fig. 12 was obtained. The width (RW) of the convex section of the uneven structural body was 100 µm, and the pitches (RW+RS) of both line ends of the plurality of convex sections of the uneven structural body were 200 µm.

When the tenth layered body (LJ9) was observed from a glass plate (G1) side while changing the direction the layered body, a similar effect to the fourth layered body (LD3) in Example 3 was provided, and higher designability was obtained.

### [Example 10]

### (Manufacture of Eleventh Layered Body)

A black ink (R3) was applied on the surface on the uneven layer side of the tenth layered body (LJ9) as a whole along the uneven surface and was heated and cured at 80°C for 30 minutes to form a first black layer, and the eleventh layered body (LK10) (a layered structure: a glass plate (G1)/an uneven layer/a first black layer) was obtained.

Further, a black ink (R4) was applied on the first black layer of the eleventh layered body (LK10) as a whole along the uneven surface and was heated and cured at 80°C for 30 minutes to form a second black layer, and a twelfth layered body (LL10) (a layered structure: a glass plate (G1)/an uneven layer/a first black layer/a second black layer) was obtained.

When the eleventh (LK10) and the twelfth (LL10) layered bodies were observed from a glass plate (G1) side while changing the direction of the layered bodies, a similar effect to the fourth layered body (LD3) in Example 3 was provided in both of the layered bodies, and higher designability was obtained. Both the eleventh (LK10) and the twelfth (LL10) layered bodies, especially, when the twelfth layered body (LL10) is used for a decorative application for a display apparatus, light leakage can be prevented, which is preferable.

### Industrial Applicability

An uneven structural body and a layered body including the uneven structural body of the present invention is preferably used for design.

An uneven structural body and a layered body including the uneven structural body of the present invention is preferably used for application such as building materials including window materials, flooring materials, wall materials, and ceiling materials; interior materials such as table tops; exterior materials of white goods including washing machines and refrigerators; and electronic devices such as a mobile phone and a personal digital assistant (PDA).

An uneven structural body and a layered body including the uneven structural body of the present invention is preferably used, for example, for a flat or a flexible panel display including a liquid display and an electroluminescence (EL) display or the like as well as a decoration or the like for a notation apparatus including a touch panel display or the like which is a combination of such panel display and a touch panel.

This application claims the priority based on Japanese Patent Application No. 2019-195928 filed on October 29, 2019, the entire disclosure of which is incorporated herein.

### Reference Signs List

1 to 5: LAYERED BODY, 11, 41: SUPPORTING MEMBER,
20, 23: UNEVEN STRUCTURAL BODY
21: FIRST FLAT LAYER, 22: UNEVEN LAYER, 22A: CONVEX SECTION,
22B: CONCAVE SECTION, 31: SECOND FLAT LAYER,
51: DECORATIVE LAYER, 61: REFLECTIVE LAYER,
111, 121: CONVEX SECTION OR CONCAVE SECTION,
111P, 121P: SPECIFIC POLE POINT,
112, 122: IMAGINARY RECTANGLE
112A, 112B, 122A, 122B: IMAGINARY RECTANGLE SIDE,
SC: CONVEX SECTION OR CONCAVE SECTION,
Ls1, Ls2, Ms1, Ms2, Ns1: IMAGINARY LINE GROUP

## Claims

1. An uneven structural body that is a layered body comprising an uneven layer having a surface including a plurality of convex sections or concave sections with a meandering linear shape in plan view,
wherein in the uneven layer, in plan view,
the plurality of convex sections or concave sections are formed to be aligned at a pitch of 1000 µm or less from a first to an n-th convex section or concave section,
n is an integer greater than or equal to 10, and
when, for each of the convex sections or the concave sections, an imaginary rectangle having a minimum area circumscribing the whole of the convex section or the concave section is drawn, and a plurality of pole points each having a tangent line parallel to a linear direction of two mutually opposed sides of the imaginary rectangle are defined as specific pole points, the plurality of pole points excluding line ends, and x is an integer satisfying 1≤x≤n-1, and
when an operation of connecting, with an x-th imaginary line, one of the specific pole points of an x-th convex section or concave section of the convex sections or concave sections and one of the specific pole points of an x+1 convex section or concave section of the convex sections or concave sections, the specific pole point of the x+1 convex section or concave section being closest to the specific pole point of the x-th convex section or concave section, is repeated with any one of the specific pole points of the first convex section or concave section as a starting point until one of the specific pole points of the n-th convex section or concave section is reached,
a linear direction of the x-th imaginary line is different from a linear direction of an (x+1)-th imaginary line.

2. The uneven structural body according to claim 1, wherein
in the uneven layer, in plan view,
when an angle [°] of each imaginary line is obtained in a range of -90 to 90° with a direction passing through the starting point and perpendicular to a side of the imaginary rectangle to which the starting point belongs as a reference line of 0°, and a graph showing a relationship between the number x of the imaginary line and the angle of the imaginary line is obtained,
the graph includes one or more angle increasing portions where the angle increases with increasing x and one or more angle decreasing portions where the angle decreases with increasing x.

3. The uneven structural body according to claim 2, wherein the graph includes two or more angle increasing portions that are the angle increasing portions and two or more angle decreasing portions that are the angle decreasing portions.

4. The uneven structural body according to any one of claims 1 to 3,
wherein in the uneven layer, each convex section or concave section has both line ends in plan view.

5. The uneven structural body according to any one of claims 1 to 4,
wherein in the uneven layer, the numbers of the specific pole points of the first to n-th convex sections or concave sections at least partially vary in plan view.

6. The uneven structural body according to any one of claims 1 to 5, wherein, in the uneven layer, the number of the specific pole points of at least one of the convex sections or the concave sections is three or more in plan view.

7. The uneven structural body according to any one of claims 1 to 6,
wherein the pitch is 100 µm or less.

8. The uneven structural body according to any one of claims 1 to 7,
wherein the uneven structural body is for design.

9. The uneven structural body according to any one of claims 1 to 8,
wherein the uneven structural body is for decorating a display apparatus.

10. A layered body comprising the uneven structural body according to any one of claims 1 to 9.

11. The layered body according to claim 10, wherein the uneven structural body includes a resin, and a resin layer is stacked directly above the uneven layer while leaving spaces in the concave sections of the uneven layer as gas portions.

12. The layered body according to claim 10 or 11, comprising a reflective layer formed along an uneven surface of the uneven layer.

13. The layered body according to claim 10 or 11, comprising a black layer formed along an uneven surface of the uneven layer.

14. The layered body according to any one of claims 10 to 13, comprising a support member made of resin or glass for supporting the uneven structural body.

15. The layered body according to any one of claims 10 to 14, comprising a decorative layer.

16. The layered body according to claim 15, wherein the decorative layer is provided on each of an upper side and a lower side of the uneven layer.

17. The layered body according to any one of claims 10 to 16, wherein the layered body is for decorating a display apparatus.
